# EUROPEAN PATENT SPECIFICATION

(11) **EP 0 859 252 B1**
(45) Date of publication and mention of the grant of the patent: **10.10.2001**
(21) Application number: 98300978.8
(22) Date of filing: 11.02.1998
(51) Int. Cl.: G02B 6/38

(54) **Improved cable strain relief**
Verbesserte Zugentlastung für Kabel
Manchon amélioré de soulagement de contraintes pour câble

(30) Priority: 12.02.1997 US 798814
(43) Date of publication of application: 19.08.1998
(73) Proprietor: THE WHITAKER CORPORATION, Wilmington, Delaware 19808 (US)
(72) Inventor: Barkus, Lee A., Millersburg, Pennsylvania 17061 (US); Hileman, Ronald A., Camp Hill, Pennsylvania 17011 (US)
(74) Representative: Warren, Keith Stanley

(56) References cited:
- EP-A- 0 414 438
- EP-A- 0 533 496
- EP-A- 0 629 887
- US-A- 4 826 277
- PATENT ABSTRACTS OF JAPAN vol. 007, no. 082 (P-189), 6 April 1983 & JP 58 011906 A (FURUKAWA DENKI KOGYO KK), 22 January 1983,

## Description

The present invention relates to a cable connector having a strain relief and, more particularly, to an optical fibre connector having a strain relief.

A known optical fiber connector for an optical fiber cable is described in US-A-4 787 706. The known optical fiber connector comprises, a housing divided into housing halves, the housing enclosing a portion of a tubular strain relief, the strain relief encircling an optical fiber cable, and a radially outward projecting shoulder on the strain relief being received in first recesses in respective housing halves. The projecting shoulder on the strain relief resists separation of the strain relief from the housing halves. The known optical fiber connector clamps a bush on the optical fiber cable, the bush resisting separation of the cable from the housing.

The strain relief of the known optical fiber connector surrounds an optical fiber cable that undergoes flexure in many different directions of flexure. Such flexure of the cable is transferred to flexure of the strain relief inside the housing halves. A further requirement of an optical fiber connector is to provide a more rigid connection of the strain relief to the housing; a connection that resists flexure and relative movement of the strain relief inside the housing halves.

EP-A-533 496 describes a connector for an optical fiber cable in which, an angled fixture, interlocked to a housing, is divided into fixture halves and encloses a portion of a strain relief for encircling the cable. The strain relief has diametrically opposed cantilever portions spaced from a radially outward projecting inner shoulder. The inner shoulder is seated in recesses in the fixture halves.

JP-A-A-5811906 describes a connector with a shoulder having a rounded edge which fits into a correspondingly shaped recess.

US-A-4 826 277 describes a connector in which a multiple fiber cable is connected to two single fiber cables, all the cables having strain relief means. Each strain relief means has a rigid distal portion at the distal end, a crimp body on the distal portion and crimp rings for securing a jacket of the cable on the crimp body.

The present invention consists in a connector for an optical fiber cable, comprising a housing divided into housing halves and enclosing a portion of a tubular strain relief for encircling the cable, and a radially outward projecting shoulder on the strain relief received in first recesses in the housing halves, characterised in that:-
the strain relief has diametrically opposed shoulders which are spaced further from the proximal end of the strain relief than the radially projecting shoulder is spaced from the proximal end by a recess in the strain relief, which have ramp surfaces inclined outwardly towards the distal end of the strain relief, and which are seated in second recesses in the housing halves, and internal shoulders on the housing halves are seated in the recess in the strain relief.

An embodiment of the invention will now be described by way of example, with reference to the accompanying drawings, according to which:
Fig. 1 is an exploded perspective view of a multiple optical fiber connector assembly comprising the improved strain relief of the present invention;
Fig. 2 is a perspective view of the improved strain relief of the present invention;
Fig. 3 is a cross-sectional view of the improved strain relief, as taken along line 3-3 in Fig. 2;
Fig. 4 is a side elevation view of the improved strain relief shown in Fig. 2;
Fig. 5 is a cross-sectional view of the improved strain relief shown in Fig. 4,
Fig. 6 is a perspective view of one half of a connector housing and an improved strain relief that has been assembled to a jacketed optical fiber cable;
Fig. 7 is a broken-away sectional view of a proximal portion of a partially assembled connector housing showing half of a strain relief receptacle but with the improved strain relief removed for clarity of illustration; and
Fig. 8 is a perspective view, similar to that shown in Fig. 6, but with the improved strain relief mounted in one half of the receptacle and with the jacketed optical fiber cable removed for clarity of illustration.

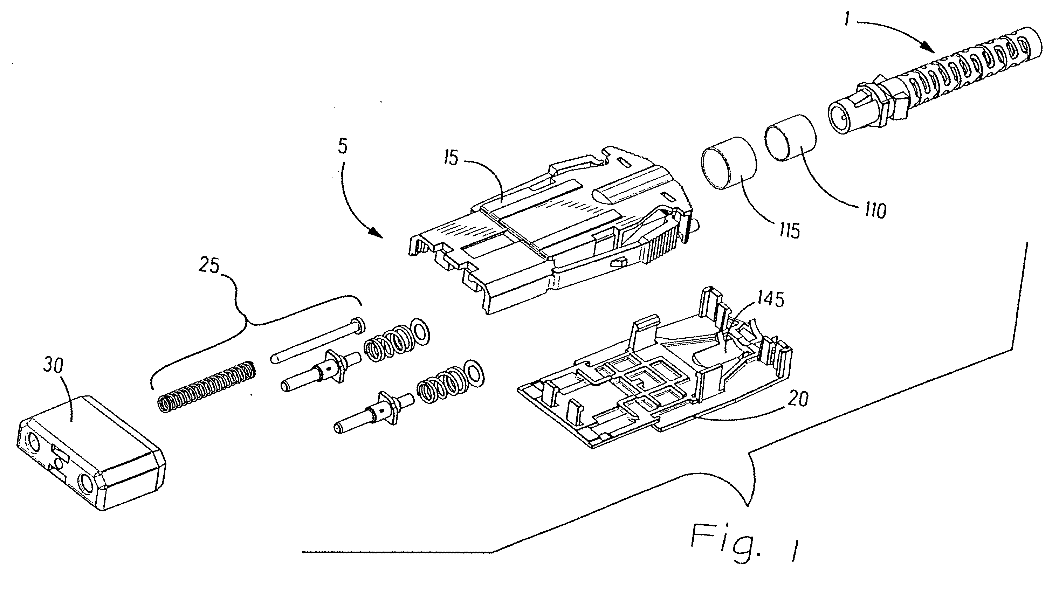

Referring to Fig. 1, strain relief 1 is adapted for use with a optical fiber connector assembly 5 comprising a first housing half 15, a second housing half 20, a pair of plug assemblies 25, and an alignment subhousing 30.

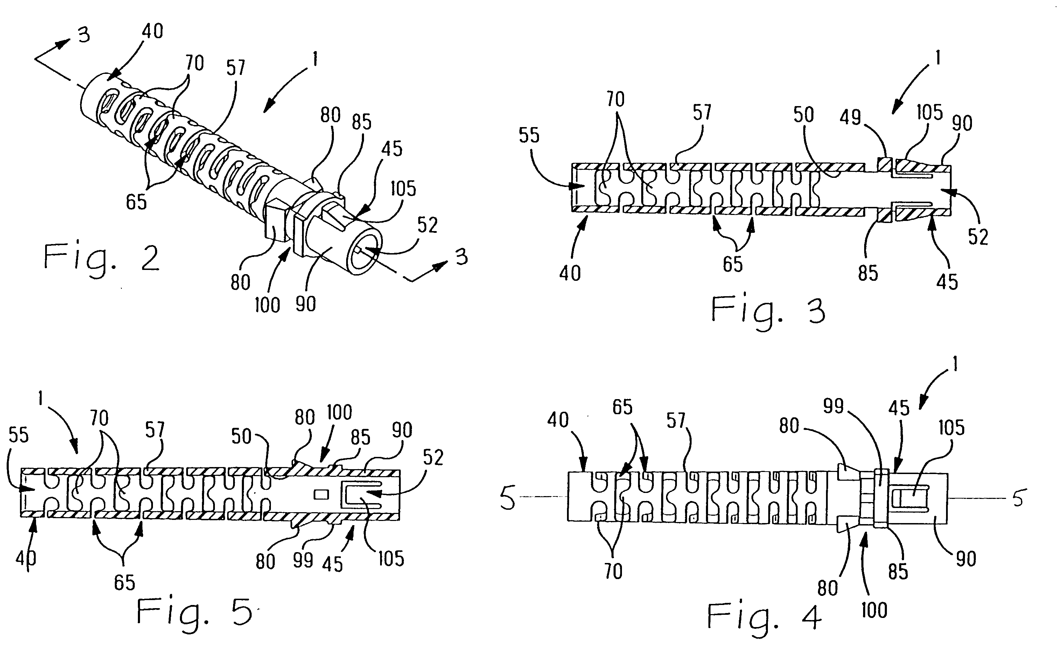

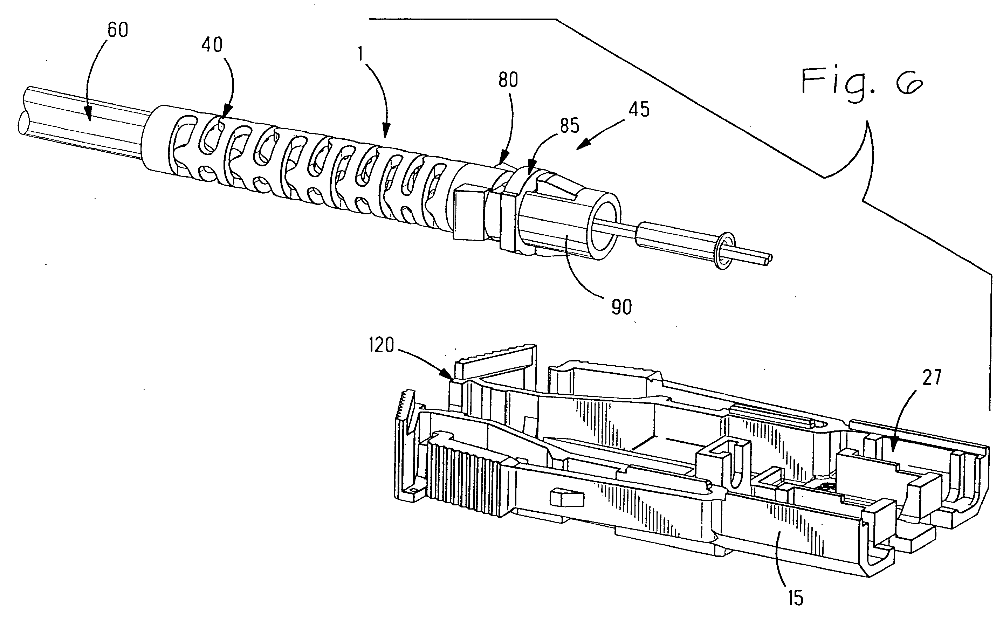

Referring now to Figs. 1-5, strain relief 1 has a substantially tubular structure comprising a distal portion 40 and a proximal portion 45. A central lumen 50 extends through strain relief 1 between open ends 52 and 55. Lumen 50 is sized and shaped so as to be capable of slidingly receiving a jacketed optical fiber cable 60 (Fig. 6) of the type that is well known in the art. Distal portion 40 forms a tapered sleeve 57. Tapered sleeve 57 defines a plurality of regularly spaced elongated slots 65 transversely through the thickness of distal portion 40. A plurality of protrusions 70 project longitudinally from the lateral sides of tapered sleeve 57 so as to project into the void space of each slot 65.

Proximal portion 45 comprises a cylindrical and substantially rigid tube including a pair of outer shoulders 80, an inner annular shoulder 85 and a cylindrical crimp body portion 90. Each outer shoulder 80 projects radially-outwardly from the exterior surface of proximal portion 45, adjacent to the proximal end of distal portion 40. Outer shoulders 80 are positioned in diametrically-opposed, spaced-relation to one another, and comprise a generally inclined-ramp shape (Figs. 1-2 and 4-5). Inner annular shoulder 85 is spaced away from each outer shoulder 80 and projects radially-outwardly from the exterior surface of proximal portion 45. Inner annular shoulder 85 includes a pair of truncated lateral sides 99 that are positioned in aligned-relation with outer shoulders 80. An annular recess 100 is defined between outer shoulders 80 and inner annular shoulder 85, and is sized and shaped to receive a corresponding feature of housing halves 15,20, as will hereinafter be disclosed in further detail.

Crimp body portion 90 comprises a relatively rigid tubular shape. A pair flexible finger elements 105 project proximally away from open end 52 so as to form a pair of diametrically-opposed cantilevered ramps. Flexible finger elements 105 are adapted to be pushed inwardly against jacketed optical fiber cable 60 when a pair of outer crimp rings 110 and 115 (Fig. 1) are crimped thereon to further secure jacketed optical fiber cable 60 to strain relief 1.

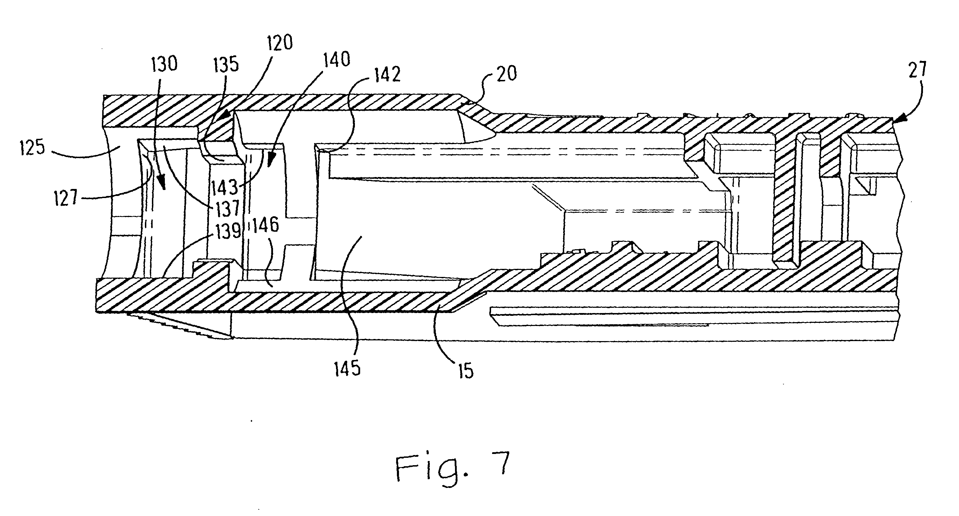

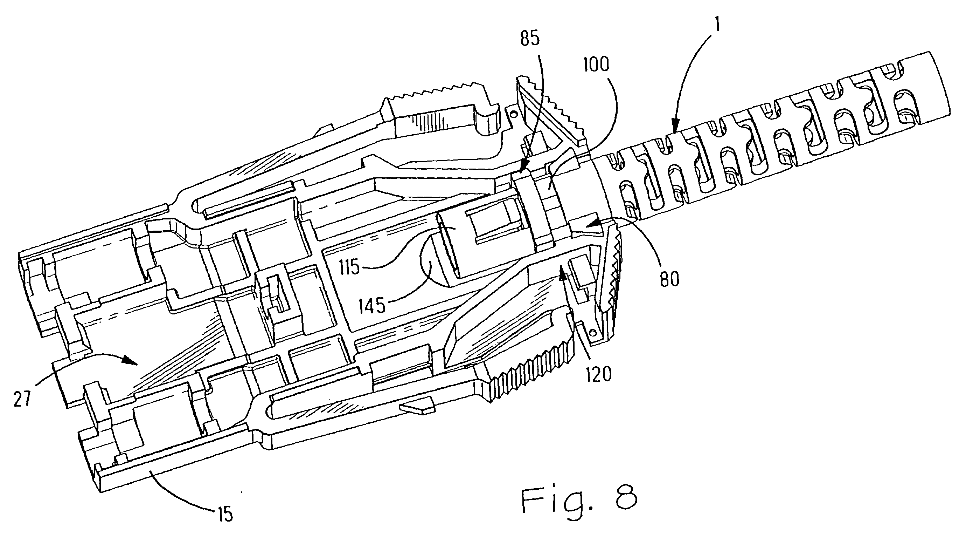

Referring to Figs. 1 and 6-8, first and second housing halves 15,20 comprise a distal portion 27 adapted to receive known plug assemblies 25 and a known subhousing 30. The internal proximal portion of each housing half 15,20 comprises corresponding halves of a receptacle 120 that is especially adapted to receive and snugly engage proximal portion 45 of strain relief 1 (Fig. 8).

Each receptacle 120 comprises an outer wall 125, a first recess 130, a first internal shoulder 135, a second recess 140, a cradling shoulder 142, and a concave nest 145 (Figs. 1, 7 and 8). Outer wall 125 defines a substantially circular opening that is sized and shaped so as to snugly receive the proximal end of distal portion 40. First recess 130 is formed between the inner surface 127 of outer wall 125 and first internal shoulder 135. Side walls 137 and 139 are disposed in confronting spaced-relation to one another, and extend between outer wall 125 and first internal shoulder 135 so as to define the void space of first recess 130. The shape of first recess 130 substantially corresponds to the profile of proximal portion 45 at the region where each outer shoulder 80 is located. In particular, side walls 137 and 139 flare outwardly as they extend toward inner surface 127 of outer wall 125 so as to provide a profile that substantially corresponds to the inclined-ramp shape of each outer shoulder 80.

Second recess 140 is formed between first internal shoulder 135 and cradling shoulder 142. Side walls 143 and 146 are disposed in confronting spaced-relation to one another, and extend between first internal shoulder 135 and cradling shoulder 142 so as to define the void space of second recess 140. Second recess 140 comprises a substantially-rectilinear shape that corresponds to the profile of truncated lateral sides 99 of inner shoulder 85. Cradling shoulder 142 and concave nest 145 comprise a rounded shape so as to support crimp body portion 90 of the jacketed optical fiber cable 60.

Referring to Figs. 1, 2, 5 and 6, strain relief 1 is assembled to jacketed optical fiber cable 60 in the following manner. Jacketed optical fiber cable 60 is first slid through central lumen 50 of strain relief 1 until a portion of the cable projects outwardly from open end 52. In this position, the jacket is peeled back onto itself and over crimp body portion 90. Next, crimp rings 110 and 115 are slid sequentially over the portion of the outer jacket of the cable 60 that has been positioned on crimp body 90. Crimp rings 110 and 115 are then crimped onto crimp body portion 90 in a known manner to secure the cable to strain relief 1. Finger elements 105 will flex inwardly so as to engage the outer surface of jacketed optical fiber cable 60 and further secure it to strain relief 1.

Once jacketed optical fiber cable 60 has been assembled and secured to strain relief 1, the strain relief assembly may be positioned within housing halves 15,20 so as to form the completed connector assembly. Strain relief 1 is oriented so as to position outer shoulders 80 above first recess 130 and inner annular shoulder 85 above second recess 140. From this position, strain relief 1 is moved toward a housing half 15 or 20 until outer shoulders 80 and inner annular shoulder 85 are fully seated within first and second recesses 130,140 and first internal shoulder 135 is seated within annular recess 100. A second housing half 15 or 20 is then positioned above the first housing half having the strain relief disposed therein. Second housing half 15 or 20 is then moved toward first housing half 15 or 20 until the remaining portions of outer shoulders 80 and inner annular shoulder 85 are received within their respective recesses 130,140 and first internal shoulder 135 is seated within annular recess 100.

First recess 130 is sized and shaped so as to snugly receive each outer shoulder 80 and second recess 140 is sized and shaped so as to snugly receive inner annular shoulder 85, without any portion of strain relief 1 projecting into the housing walls. The flared profile of first recess 130, adjacent to inner surface 127 and side wall 137, provides a large surface area for each outer shoulder 80 to bare upon when jacketed optical fiber cable 60 is subjected to tensile loads. Additionally, the positioning of first internal shoulder 135 snugly between outer shoulders 80 and inner annular shoulder 85 provides increased structural support to the assembly, thus enabling jacketed optical fiber cable 60 to adequately resist both longitudinal and transverse flexure relative to connector assembly 5.

Positioning of outer shoulders 80 and inner annular shoulder 85 within recesses 130 and 140 not only restricts the movement of strain relief 1 longitudinally, relative to housing halves 15, 20, but also restricts the transverse movement of strain relief 1 during flexure of the optical fiber cable. As a result of this construction, when jacketed optical fiber cable 60 is flexed side to side or up and down, outer shoulders 80 are structurally supported by inner surface 127, first internal shoulder 135, and side walls 137,139 so as to absorb flexure induced stresses. Likewise, inner annular shoulder 85 is structurally supported by first internal shoulder 135, cradling shoulder 142, and side walls 143,146 so as to further absorb flexure induced stresses.

## Claims

1. A connector for an optical fiber cable, comprising a housing divided into housing halves (15,20) and enclosing a portion of a tubular strain relief (1) for encircling the cable (60), and a radially outward projecting shoulder (85) on the strain relief (1) received in first recesses (140,140) in the housing halves (15,20), **characterised in that**:-
the strain relief (1) has diametrically opposed shoulders (80) which are spaced further from the proximal end of the strain relief than the radially projecting shoulder (85) the diametrically opposed shoulders being on one side of a recess (100) in the strain relief and the radially projecting shoulders being on the other side, the diametrically opposed shoulders having ramp surfaces inclined outwardly towards the distal end of the strain relief, and which are seated in second recesses (130) in the housing halves (15,20), and internal shoulders (135) on the housing halves are seated in the recess (100) in the strain relief.

2. A connector according to claim 1,wherein the opposed shoulders (80) and the radially projecting shoulder (85) are on a rigid proximal portion (45) of the strain relief (1).

3. A connector according to claim 2, including a crimp body (90) on the distal portion (45) of the strain relief (1), and crimp rings (110,115) for securing a jacket of the cable (60) on the crimp body (90).

## Patentansprüche

1. Verbinder für ein Lichtwellenleiterkabel, mit einem in Gehäusehälften (15, 20) geteilten und einen Teil einer röhrenförmigen Zugentlastung (1) zur Umfassung des Kabels (60) umschließenden Gehäuse sowie einer radial nach außen ragenden Schulter (85) an der Zugentlastung (1), die in den ersten Aussparungen (140, 140) in den Gehäusehälften (15, 20) aufgenommen wird;
**dadurch gekennzeichnet, daß**
die Zugentlastung (1) diametral gegenüberliegende Schultern (80) aufweist, die weiter vom proximalen Ende der Zugentlastung beabstandet sind als die radial vorragende Schulter (85), wobei sich die diametral gegenüberliegenden Schultern auf einer Seite einer Aussparung (100) in der Zugentlastung befinden und sich die radial vorragenden Schultern auf der anderen Seite befinden, wobei die diametral gegenüberliegenden Schultern Rampenflächen aufweisen, die nach außen zum distalen Ende der Zugentlastung geneigt sind, und in zweiten Aussparungen (130) in den Gehäusehälften (15, 20) angeordnet sind und Innenschultern (135) an den Gehäusehälften in der Aussparung (100) in der Zugentlastung angeordnet sind.

2. Verbinder nach Anspruch 1, bei dem sich die gegenüberliegenden Schultern (80) und die radial vorragende Schulter (85) an einem starren proximalen Teil (45) der Zugentlastung (1) befinden.

3. Verbinder nach Anspruch 2, mit einem Quetschkörper (90) am distalen Teil (45) der Zugentlastung (1) und Quetschringen (110, 115) zur Befestigung eines Mantels des Kabels (60) am Quetschkörper (90).

## Revendications

1. Connecteur pour un câble à fibre optique, comprenant un boîtier divisé en moitiés de boîtier (15, 20) et renfermant une portion d'une décharge de traction tubulaire (1) pour encercler le câble (60) et un épaulement (85) saillant radialement vers l'extérieur sur la décharge de traction (1) reçue dans des premiers retraits (140, 140) dans les moitiés de boîtier (15, 20), **caractérisé en ce que** :
la décharge de traction (1) a des épaulements diamétralement opposés (80) qui sont espacés davantage de l'extrémité proximale de la décharge de traction que l'épaulement saillant radialement (85), les épaulements diamétralement opposés étant d'un côté d'un retrait (100) dans la décharge de traction et les épaulements saillant radialement étant de l'autre côté, les épaulements diamétralement opposés ayant des surfaces de rampe inclinées vers l'extérieur vers l'extrémité distale de la décharge de traction, et qui sont reçues dans des deuxièmes retraits (130) dans les moitiés de boîtier (15, 20), et des épaulements internes (135) sur les moitiés de boîtier sont reçus dans le retrait (100) dans la décharge de traction.

2. Connecteur selon la revendication 1, dans lequel les épaulements opposés (80) et l'épaulement saillant radialement (85) sont sur une portion proximale rigide (45) de la décharge de traction (1).

3. Connecteur selon la revendication 2, comportant un organe de sertissage (90) sur la portion distale (45) de la décharge de traction (1) et des bagues de sertissage (110, 115) pour fixer une gaine du câble (60) sur l'organe de sertissage (90).
